# FASCICULE DE BREVET EUROPEEN

(11) **EP 0 920 151 B1**
(45) Date de publication et mention de la délivrance du brevet: **19.12.2001**
(21) Numéro de dépôt: 98402917.3
(22) Date de dépôt: 24.11.1998
(51) Int. Cl.: H04B 10/10, H04B 10/152

(54) **Procédé de transmission d'informations sur une liaison infrarouge et équipement pour la mise en oeuvre du procédé**
Verfahren zur Informationsübertragung über eine Infrarotverbindung und Einrichtung zum Durchführen des Verfahrens
Method for information transmission over an infrared link and equipment for the application of such a method

(30) Priorité: 25.11.1997 FR 9714779
(43) Date de publication de la demande: 02.06.1999
(73) Titulaire: SAGEM SA, 75116 Paris (FR)
(72) Inventeur: Heurtaux, Frédéric, 13610 Le Puy Sainte Reparade (FR); Durand, Dominique, 95000 Cergy (FR)
(74) Mandataire: Bloch, Gérard

(56) Documents cités:
- EP-A- 0 331 255
- EP-A- 0 433 481
- WO-A-95/08879
- GB-A- 2 219 165
- PATENT ABSTRACTS OF JAPAN vol. 010, no. 158 (E-409), 6 juin 1986 & JP 61 012138 A (NIPPON DENKI KK), 20 janvier 1986

## Description

Les transmissions par infrarouge sont fréquemment utilisées pour relier entre eux des terminaux proches les uns des autres, et en particulier des terminaux mobiles. On évite ainsi toute infrastructure de transmission de signaux. Un ordinateur personnel portable peut ainsi être relié à une imprimante.

Cependant, comme les positions relatives des terminaux sont variables, il faut une diffusion omnidirectionnelle, si bien que le terminal récepteur ne reçoit qu'une faible fraction d'énergie émise, fraction qui décroît très rapidement avec la distance entre les deux terminaux. Afin de fixer un compromis énergie diffusée/distance admissible, la norme IRDA (Association pour les Données Infrarouge) prévoit une portée de un mètre, fixant donc un niveau nominal d'émission, pour une sensibilité fixée du récepteur. En cas de bonne réception, celui-ci fournit un accusé de réception par une voie de retour.

Pour un terminal mobile, alimenté par une batterie de capacité limitée, la consommation d'énergie d'excitation de son émetteur infrarouge obère son autonomie.

EP-A 433 481 enseigne d'asservir un émetteur d'une liaison à mettre en service par le récepteur associé commandant, par une voie de retour, l'augmentation progressive du niveau émis tant que le niveau reçu n'atteint pas un seuil de bonne réception. Ce procédé permet certes un fonctionnement à niveau d'émission réduit mais il présente l'inconvénient rédhibitoire de commander une émission permanente de l'émetteur.

La présente invention vise à limiter l'inconvénient évoqué plus haut sans cependant réduire la portée nominale.

A cet effet, l'invention concerne tout d'abord un procédé de transmission d'informations sur une liaison infrarouge entre un équipement émetteur et un équipement récepteur, selon la revendication 1.

Ainsi, on établit une boucle d'asservissement du niveau d'énergie d'émission, qui permet de mesurer ou d'estimer la distance, ou l'atténuation, entre les équipements, afin d'adapter le niveau d'énergie émise au besoin réel et ainsi éviter un gaspillage d'énergie.

On peut augmenter progressivement le niveau de modulation, dans l'attente de l'accusé de réception, ou encore faire décroître progressivement ce niveau, jusqu'à disparition de l'accusé de réception et remonter le niveau pour faire réapparaître l'accusé de réception. On peut encore procéder par dichotomie pour trouver plus rapidement le niveau réduit de seuil minimal.

L'invention concerne en outre un équipement de transmission pour la mise en oeuvre du procédé de l'invention, selon la revendication 5.

L'invention sera mieux comprise à l'aide de la description suivante d'un mode de mise en oeuvre préféré du procédé de l'invention, en référence au dessin annexé, sur lequel :
- la figure 1 représente schématiquement un combiné portatif de radiotéléphonie cellulaire GSM et un ordinateur personnel PC fixe,
- la figure 2 illustre l'évolution de la puissance d'un émetteur infrarouge du combiné en fonction du temps t, et
- la figure 3, associée, illustre la réponse du PC.

Le combiné radiotéléphonique GSM 1 comporte ici un microprocesseur 2 associé à une mémoire de données 3 pour échanger des données, d'une part, à travers le réseau GSM et, d'autre part, avec un appareil de traitement de données, ici un ordinateur personnel 11, fixe. On peut ainsi relier le PC 11 à d'autres appareils, par exemple à travers l'INTERNET.

Le combiné 1 comporte un émetteur infrarouge 4 pour établir une liaison 20 de données, ou d'informations, avec un récepteur 12 du PC 11. En sens inverse, il est prévu une liaison de retour 21 pour fournir des accusés de réception sur la liaison 20, au moyen d'un émetteur 14 du PC 11 commandant un récepteur 7 du combiné 1.

En pratique, la liaison 21 est aussi du type infrarouge et l'émetteur 14 d'accusés de réception est commandé par un circuit 13 contrôlant la validité des données reçues par le récepteur 12 et transmettant celles-ci, après contrôle, à une mémoire 15.

Dans le combiné GSM 1, le récepteur d'acquis 7 commande, par une liaison 8 et à travers un circuit de réglage 9, un circuit 5 d'ajustement de la puissance d'émission d'une diode électroluminescente 6 émettant dans l'infrarouge. Le circuit 5 est ici monté en série sur l'alimentation +Vcc de la diode 6, et est schématisé sous la forme d'une résistance réglable permettant de moduler à volonté le niveau d'énergie lumineuse émise, entre un niveau nominal (courant nominal Inom) et un niveau minimal (Imin). Le niveau nominal correspond ici à 1 mètre de portée et le niveau minimal à 0,1 mètre. Le microprocesseur 2 commande de façon binaire le retour à la masse du courant traversant la diode 6 en fonction des bits 0 ou 1 à émettre.

Pour établir une liaison de données du combiné 1 vers le PC 11 selon le procédé de l'invention, on recherche, dans une phase d'établissement de la liaison 20, un seuil minimal d'énergie d'émission I1, en modulant celle-ci à un niveau inférieur au niveau nominal Inom et, la liaison 20 étant établie par réception d'un accusé de réception, on poursuit l'émission à un niveau d'énergie I2 fonction du seuil minimal I1.

Dans la phase d'établissement de la liaison 20, on peut émettre des informations utiles à transmettre, protégées par un code de détection d'erreurs, ou encore un motif prédéterminé réservé à cette phase.

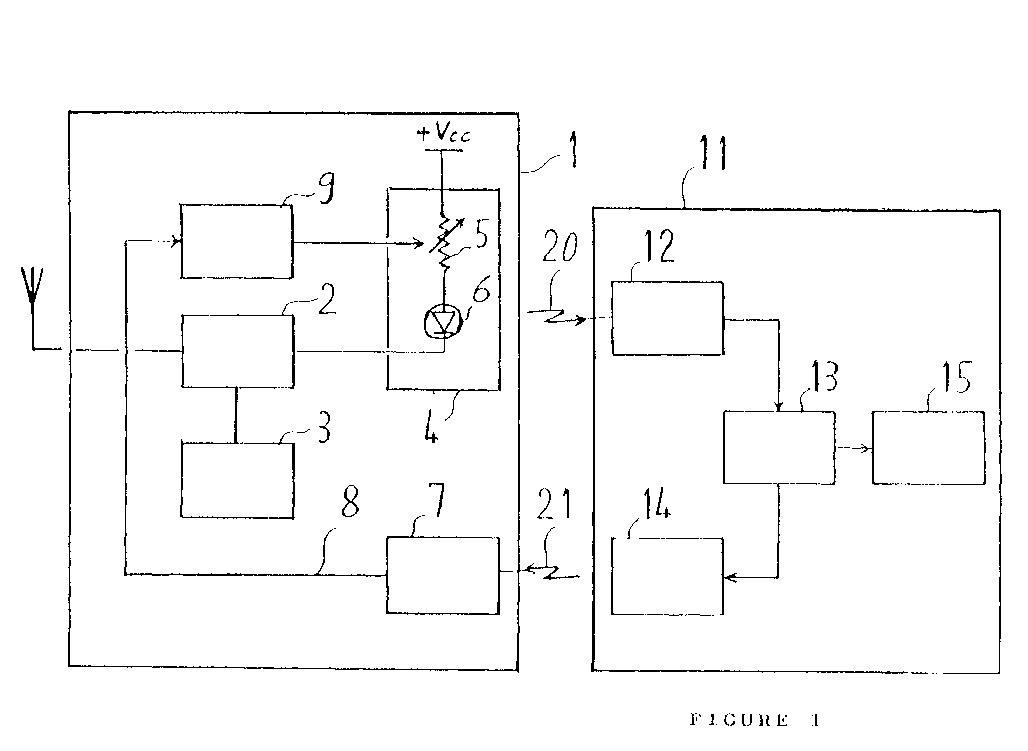

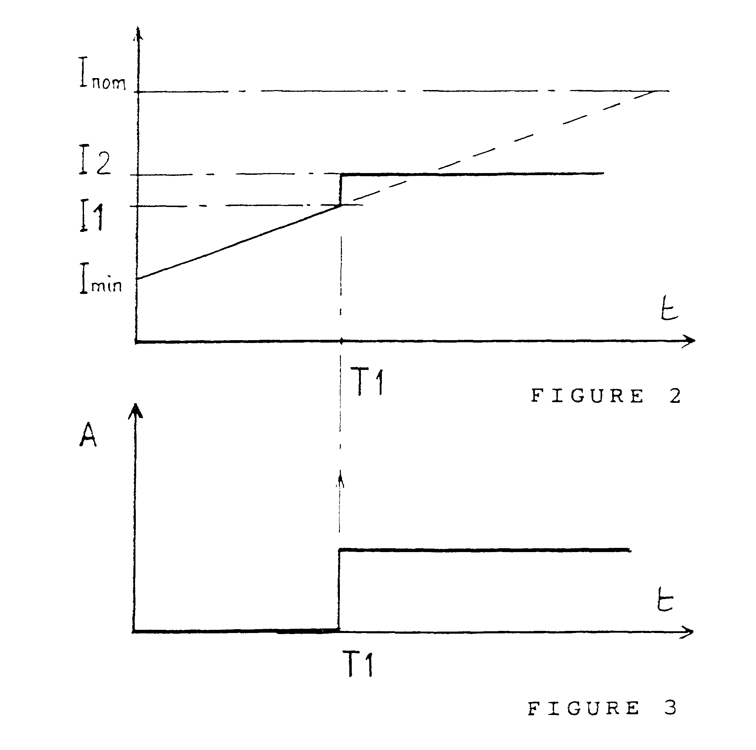

Comme le montre la figure 1, les liaisons 20 et 21 forment une boucle avec leurs circuits d'extrémité et le circuit 9 module le niveau d'émission de la diode 6 afin de provoquer une transition sur la liaison de retour 21 indiquant le franchissement, à la montée ou à la descente, du seuil de sensibilité du récepteur de données 12. Sur la figure 2, le circuit 9 fait croître progressivement le courant diode et, à un instant T1, le circuit 13 reconnaît les données qu'il reçoit et commande l'émission d'un accusé de réception A par la liaison 21 (fig. 3).

Pour la clarté de l'exposé, cet accusé de réception A est ici un niveau continu mais, en pratique, il s'agit d'une ou plusieurs impulsions formant un motif déterminé. Le circuit 9 repère alors le niveau d'émission optique (6), ou le courant de commande de la diode 6, et, ici, stabilise le courant d'excitation diode à un niveau I2 légèrement supérieur à I1 pour assurer une marge de sécurité de transmission. En variante, il aurait pu être prévu de faire décroître le courant diode depuis son niveau nominal Inom, selon la courbe en ligne pointillée, l'axe des temps étant retourné. On peut encore tout aussi bien procéder par dichotomie pour rechercher le seuil minimal I1 de bon fonctionnement. On applique alors successivement des valeurs extrêmes faibles et fortes de courant diode encadrant la valeur I1 recherchée, et on réduit progressivement l'écart entre valeurs extrêmes appliquées jusqu'à estimer, avec la précision voulue, la valeur de seuil I1.

Pour moduler le niveau d'énergie lumineuse, le circuit 5 peut consister en une résistance ajustable, par exemple une thermistance à chauffage variable commandant sa variation de résistance. Un transistor MOS peut de même servir de résistance variable, par commande de sa grille. On peut encore prévoir un générateur de courant constant commandé et par exemple un transistor NPN d'alimentation relié en sortie par son émetteur à l'anode de la diode 6, en série avec une résistance de limitation, la base du transistor recevant, du circuit 9, une tension de réglage modulant le courant émetteur.

D'une façon générale, le circuit 9 peut être prévu pour un réglage pas à pas du niveau d'énergie d'émission, ce qui permet de le faire évoluer plus rapidement afin d'éviter une perte de temps excessive à l'établissement de la liaison 20. Le circuit 9, qui peut en fait n'avoir qu'une existence fonctionnelle, en étant intégré au microprocesseur 2, peut en particulier comporter un convertisseur numérique / analogique de commande du circuit de modulation 5.

Il peut encore être prévu, en variante, de moduler l'énergie optique, émise pour chaque bit, non pas par le niveau de puissance instantanée mais par la durée d'émission de chaque bit. En effet, une durée accrue d'émission bit revient à abaisser le seuil de sensibilité du récepteur 12, puisque celui-ci peut intégrer le signal optique utile sur une durée accrue et donc éliminer d'autant mieux le bruit parasite.

Le circuit 5 de modulation du niveau du courant d'excitation diode peut donc ainsi être complété par un circuit de modulation temporelle, en largeur, intégré par exemple au microprocesseur 2. Il pourrait même être prévu d'émettre à niveau réduit, non modulé, et de ne moduler que la durée bit

En variante, on remarquera que le procédé de l'invention peut aussi s'appliquer dans un cas où c'est le PC 11 qui initialise un dialogue en envoyant un message au combiné 1, à puissance nominale. Le combiné 1 répond alors par un accusé de réception émis à niveau inférieur au niveau nominal I nom, cet accusé de réception étant l'équivalent de l'émission à niveau réduit dans la phase d'établissement de la liaison 20, indiquée précédemment.

Si le PC 11 ne perçoit pas l'accusé de réception, il répète le message et le combiné 1 émet en retour l'accusé de réception à un niveau plus élevé que le précédent et ainsi de suite jusqu'à ce que le PC 11 indique qu'il a bien reçu l'accusé de réception, par le fait qu'il cesse d'émettre le message (ce fait étant un accusé de réception implicite) ou qu'il émet un autre message quelconque. Il peut être prévu de numéroter chaque émission afin de faciliter la gestion des émissions répétées. Cet autre message, différent du précédent, n'est pas en lui-même un accusé de réception par son contenu mais c'est le fait qu'il soit émis, et reçu, qui constitue l'accusé de réception.

Les diverses possibilités exposées précédemment pour déterminer avec précision le seuil Il restent valables, en étendant éventuellement cette détermination sur les réceptions de plusieurs messages quelconques.

## Revendications

1. Procédé de transmission d'informations sur une liaison infrarouge (20) entre un équipement émetteur (1) et un équipement récepteur (11), l'équipement émetteur (1) comportant des moyens de modulation de la puissance d'émission pour l'élever jusqu'à un niveau nominal (Inom), correspondant à une portée déterminée, et une voie de retour (21) étant prévue pour transmettre un accusé de réception, procédé dans lequel on recherche, dans une phase d'établissement de la liaison, un seuil minimal d'énergie d'émission (I1), en modulant celle-ci à un niveau inférieur au niveau nominal (Inom) et, la liaison (20) étant établie par réception d'un accusé de réception, on poursuit l'émission à un niveau d'énergie (12) fonction dudit seuil minimal (I1), procédé **caractérisé par le fait que**, pour établir la liaison infrarouge (20), l'équipement récepteur (11) envoie un message à l'équipement émetteur (1) par la voie de retour (21) et l'équipement émetteur (1) envoie un accusé de réception sur la liaison (20) à établir et l'équipement récepteur (11) répéte le message jusqu'à ce que, l'équipement émetteur (1) ayant à chaque fois élevé le niveau de l'accusé de reception, l'équipement récepteur (11) le recoive et émette un autre message.

2. Procédé selon la revendication 1, dans lequel on augmente progressivement le niveau de modulation.

3. Procédé selon la revendication 1, dans lequel on fait décroître progressivement le niveau de modulation.

4. Procédé selon la revendication 1, dans lequel on procède par dichotomie pour rechercher le seuil minimal (I1).

5. Equipement de transmission pour la mise en oeuvre du procédé de la revendication 1, comportant des moyens infrarouge (6) d'émission d'informations, des moyens (7) de réception d'un accusé de réception des informations, provenant d'un équipement correspondant (11), et des moyens (5, 9) pour moduler le niveau d'énergie des moyens d'émission (6), sous la commande des moyens de réception (7), **caractérisé par le fait que** les moyens de modulation (2, 9) sont agencés pour moduler l'énergie par variation de la durée d'émission.

6. Equipement selon la revendication 5, dans lequel les moyens de modulation (5) comportent un générateur de courant constant modulable.

7. Equipement selon la revendication 5, dans lequel les moyens de modulation (5) comportent un élément à résistance variable commandée.

8. Equipement selon la revendication 7, dans lequel l'élément à résistance variable est un circuit MOS.

9. Equipement selon l'une des revendications 5 à 8, dans lequel les moyens de modulation (9) sont agencés pour moduler pas à pas le niveau d'énergie.

10. Equipement selon l'une des revendications 5 à 9, dans lequel il est prévu un convertisseur numérique/analogique de commande des moyens de modulation (5).

## Patentansprüche

1. Verfahren zur Informationsübertragung über eine Infrarotverbindung (20) zwischen einer Sender- (1) und einer Empfängereinrichtung (11), wobei die Sendereinrichtung (1) Mittel zur Modulation der Sendeleistung bis auf einen einer bestimmten Reichweite entsprechenden Nennpegel (Inom) sowie einen Rückkanal (21) für die Übermittlung einer Rückmeldung aufweist, wobei bei diesem Verfahren im Zuge des Verbindungsaufbaus eine Minimalschwelle der abgestrahlten Energie (I1) ermittelt wird während diese auf einen unterhalb des Nennpegels (Inom) liegenden Pegel moduliert wird und wenn die Verbindung (20) durch eine Rückmeldungbestätigung aufgebaut ist, die Abstrahlung auf einem Energiepegel (I2) in Abhängigkeit von der erwähnten Minimalschwelle (I1) fortgesetzt wird, **dadurch gekennzeichnet, dass** zum Aufbau der Infrarotverbindung (20) die Empfängereinrichtung (11) eine Meldung an die Sendereinrichtung (1) über den Rückkanal (21) überträgt und die Sendereinrichtung (1) eine Bestätigung über den Aufzubanende Verbindung (20) und die Empfängereinrichtung (11) die Meldung, nachdem der Pegel der Rückmeldung in der Sendereinrichtung (1) jedes Mal angehoben wurde, solange wiederholt, bis die Empfängereinrichtung (11) die Meldung aufnimmt und eine andere Meldung abgibt.

2. Verfahren nach Anspruch 1, **dadurch gekennzeichnet, dass** der Modulationspegel progressiv angehoben wird.

3. Verfahren nach Anspruch 1, **dadurch gekennzeichnet, dass** der Modulationspegel progressiv abgesenkt wird.

4. Verfahren nach Anspruch 1, **dadurch gekennzeichnet, dass** die Minimalschwelle (I1) im Wege der Dichotomie ermittelt wird.

5. Übertragungseinrichtung zur Durchführung des Verfahrens nach Anspruch 1 mit Informationen übertragenden Infrarotmitteln (6), Mitteln (7) zum Empfang einer Rückmeldung der Informationen aus einer korrespondierenden Einrichtung (11) und Mitteln (5, 9) zur Modulation des Energiepegels der über die Empfangsmittel (7) angesteuerten Sendemittel (6), **dadurch gekennzeichnet, dass** die Modulationsmittel (2, 9) für die Modulation der Energie durch Änderung der Sendedauer ausgelegt sind.

6. Einrichtung nach Anspruch 5, **dadurch gekennzeichnet, dass** die Modulationsmittel (5) eine modulierbare Konstantstromquelle aufweisen.

7. Einrichtung nach Anspruch 5, **dadurch gekennzeichnet, dass** die Modulationsmittel (5) ein ansteuerbares variables Widerstandselement beinhalten.

8. Einrichtung nach Anspruch 7, **dadurch gekennzeichnet, dass** das variable Widerstandselement ein MOS-Baustein ist.

9. Einrichtung nach einem der Ansprüche 5 bis 8, **dadurch gekennzeichnet, dass** die Modulationsmittel (9) für die schrittweise Modulation des Energiepegels ausgelegt sind.

10. Einrichtung nach einem der Ansprüche 5 bis 9, **dadurch gekennzeichnet, dass** die Modulationsmittel (5) über einen D/A-Wandler gesteuert sind.

## Claims

1. Method for transmitting information on an infrared connection (20) between a transmitting apparatus (I) and a receiving apparatus (11), the transmitting apparatus (1) comprising means for modulating the transmission power in order to raise it to a nominal level (Inom), corresponding to a specific range, and a return channel (21) being provided to transmit an acknowledgement of receipt, a method in which, during a phase of establishing the connection, a minimum transmission energy threshold (I1) is sought by modulating the transmission energy to a level lower than the nominal level (Inom) and, the connection (20) being established by reception of an acknowledgment of receipt, the transmission is continued at an energy level (I2) which is a function of the said minimum threshold (I1), the method being **characterised in that** in order to establish the infrared connection (20), the receiving apparatus (11) sends a message to the transmitting apparatus (1) by the return channel (21) and the transmitting apparatus (1) sends an acknowledgement of receipt via the connection (20) to be established and the receiving apparatus (11) repeats the message until - the transmitting apparatus (1) having on each occasion raised the level of the acknowledgement of receipt - the receiving apparatus (11) receives it and transmits another message.

2. Method according to claim 1, wherein the modulation level is increased progressively.

3. Method according to claim 1, wherein the modulation level is lowered progressively.

4. Method according to claim 1, wherein the minimum threshold (I1) is sought by dichotomy.

5. Transmission apparatus for implementation of the method of claim 1, comprising infrared means (6) for transmission of information, means (7) for receiving an acknowledgement of receipt of the information, coming from a corresponding apparatus (11), and means (5, 9) to modulate the energy level of the transmission means (6) under the command of the reception means (7), **characterised in that** the modulation means (2, 9) are arranged to modulate the energy by variation of the duration of transmission.

6. Apparatus according to claim 5, wherein the modulation means (5) comprise a generator of constant current which can be modulated.

7. Apparatus according to claim 5, wherein the modulation means (5) comprise a controlled variable resistance element.

8. Apparatus according to claim 7, wherein the variable resistance element is a MOS circuit.

9. Apparatus according to one of claims 5 to 8, wherein the modulation means (9) are arranged to modulate the energy level in a step by step manner.

10. Apparatus according to one of claims 5 to 9, wherein a digital/analogue converter for control of the modulation means (5) is provided.
